# DEMANDE DE BREVET EUROPEEN

(11) **EP 4 782 647 A1**
(43) Date de publication de la demande: **29.07.2026**
(21) Numéro de dépôt: 26154616.2
(22) Date de dépôt: 28.01.2026
(51) Int. Cl.: E06B 9/72

(54) **ACTIONNEUR ÉLECTROMÉCANIQUE, DISPOSITIF D ENTRAÎNEMENT MOTORISÉ ET DISPOSITIF D OCCULTATION COMPRENANT UN TEL ACTIONNEUR, ET PROCÉDÉ D ASSEMBLAGE D'UN TEL ACTIONNEUR**

(30) Priorité: 28.01.2025 FR 2500891
(71) Demandeur: Somfy Activites SA, 74300 Cluses (FR)
(72) Inventeur: QIAN, Jibin, HUZHOU, 313009 (CN); LIU, Xingkun, HUZHOU, 313009 (CN)
(74) Mandataire: Lavoix

(57) **Abrégé**

Un actionneur électromécanique d'un dispositif d'occultation comprenant au moins un moteur électrique configuré pour entraîner un arbre de sortie (42) de l'actionneur en rotation autour d'un axe de rotation (X42) et une roue (44) de liaison cinématique entre le l'arbre de sortie et un tube d'enroulement d'un écran. L'arbre de sortie (42) est équipé d'un verrou, pivotant autour d'un axe de pivotement (Y42) radial à l'axe de rotation (X42) entre une première position, compatible avec la mise en place de la roue de liaison (44) sur l'arbre de sortie, et une deuxième position, de maintien en position axiale de la roue de liaison sur l'arbre de sortie.

## Description

La présente invention concerne un actionneur électromécanique d'un dispositif d'occultation, ainsi qu'un dispositif d'entraînement motorisé pour l'entraînement d'un écran d'un dispositif d'occultation, comprenant un tel actionneur électromécanique. La présente invention concerne également un dispositif d'occultation comprenant un tel dispositif d'entraînement motorisé, ainsi qu'un procédé d'assemblage d'un actionneur électromécanique.

Le domaine technique de la présente invention est celui des dispositifs d'occultation qui comprennent un dispositif d'entraînement motorisé mettant en mouvement un écran, entre une première position et au moins une deuxième position.

Dans ce genre de dispositif, il est connu de transmettre un mouvement de rotation d'un arbre de sortie de l'actionneur électromécanique vers un arbre d'enroulement d'un écran, au moyen d'une roue de liaison configurée pour transmettre un couple entre l'arbre de sortie et l'arbre d'enroulement.

Pour remplir sa fonction, la roue de liaison doit être montée sur, et immobilisée en rotation et en translation avec, l'arbre de sortie de l'actionneur électromécanique. Pour ce faire, il est connu d'utiliser des systèmes mécaniques plus ou moins complexes assurant notamment un maintien axial de la roue de liaison sur l'arbre de sortie.

BE1028383A1 enseigne, par exemple, d'utiliser une vis et un élément de blocage axial pour solidariser une roue à un arbre de sortie d'un actionneur. FR2934006A1 repose sur un principe voisin, pour l'assemblage de deux parties d'une roue d'entraînement entre elles. Il est par ailleurs connu de WO2005/033464A1, WO2006/061349A1, WO2005/033464A1 et EP2314824A1 d'utiliser des agrafes élastiquement déformables pour retenir une roue de liaison sur un arbre de sortie d'un actionneur électromécanique.

Selon une autre technique, une gorge est prévue dans l'arbre de sortie de l'actionneur électromécanique et un circlip est engagé dans cette gorge pour former une butée s'opposant à une séparation axiale entre la roue de liaison et l'arbre de sortie. Le circlip constitue une pièce indépendante du reste de l'actionneur qui risque d'être égarée ou de tomber au sol lors de l'assemblage de l'actionneur électromécanique. Lors d'une opération de maintenance de l'actionneur électromécanique, un démontage du circlip peut être difficile et nécessite l'utilisation d'un outil adapté.

Les systèmes connus sont relativement complexes à mettre en œuvre et nécessitent une main-d'œuvre qualifiée.

C'est à ces inconvénients qu'entend plus particulièrement remédier l'invention en proposant un nouvel actionneur électromécanique dont le montage est simplifié et facilité, tout en demeurant fiable.

A cet effet, l'invention concerne un actionneur électromécanique d'un dispositif d'occultation, cet actionneur comprenant au moins un moteur électrique configuré pour entraîner un arbre de sortie de l'actionneur en rotation autour d'un axe de rotation et une roue de liaison cinématique entre le l'arbre de sortie et un tube d'enroulement d'un écran. Conformément à l'invention, l'arbre de sortie est équipé d'un verrou, pivotant autour d'un axe de pivotement radial à l'axe de rotation entre une première position, compatible avec la mise en place de la roue de liaison sur l'arbre de sortie, et une deuxième position, de maintien en position axiale de la roue de liaison sur l'arbre de sortie.

Grace à l'invention, le verrou pivotant peut être pré-monté sur l'arbre de sortie de l'actionneur électromécanique préalablement à la mise en place de la roue de liaison autour de cet arbre. Il est alors possible de mettre la roue de liaison en place sur l'arbre de sortie. Ensuite, une manipulation simple qui ne nécessite pas d'outil particulier permet de déplacer le verrou de sa première position vers sa deuxième position, dans laquelle il maintient efficacement la roue de liaison en position axiale sur l'arbre de sortie. La mise en place et le maintien en position de la roue de liaison sur l'arbre de sortie sont facilités et ne requièrent pas une main-d'œuvre hautement qualifiée. A partir du moment où il est pré-monté sur l'arbre de sortie, le verrou ne risque pas d'être égaré.

Selon des aspects avantageux mais non obligatoires de l'invention, un tel actionneur électromécanique peut incorporer une ou plusieurs des caractéristiques suivantes prises selon toutes combinaisons techniquement admissibles :
- Le verrou est une bande de métal élastiquement déformable, globalement en forme de U, notamment de type de circlip.
- L'amplitude angulaire de pivotement du verrou, autour de l'axe de pivotement, entre ses première et deuxième positions, est d'environ 90°, un plan médian du verrou est parallèle à l'axe de rotation lorsque le verrou est dans sa première position et le plan médian du verrou est perpendiculaire à l'axe de rotation lorsque le verrou est dans sa deuxième position.
- Le verrou comprend deux ergots et l'arbre de sortie comprend deux logements diamétralement opposés et configurés pour recevoir les ergots, avec possibilité de rotation des ergots dans les logements permettant le pivotement du verrou entre ses première et deuxième positions.
- Les ergots sont disposés sur des plaquettes disposées aux extrémités des branches du U, se font face et s'étendent l'un en direction de l'autre.
- Chaque ergot s'étend à partir d'une plaquette du verrou ; l'arbre de sortie définit au moins une première encoche de réception partielle d'une plaquette lorsque le verrou est dans sa première position ; l'arbre de sortie définit au moins une deuxième encoche de réception partielle de la plaquette lorsque le verrou est dans sa deuxième position et ; un relief en saillie sépare les première et deuxième encoches.
- Le relief en saillie est délimité par un chanfrein du côté de la première encoche et par une surface de butée du côté de la deuxième encoche et le relief en saillie s'oppose moins au pivotement du verrou de sa première position vers sa deuxième position qu'au pivotement du verrou de sa deuxième position vers sa première position.
- L'arbre de sortie comprend des nervures de transmission de couple à la roue de liaison, laquelle est équipée de rainures internes de réception des nervures de l'arbre de sortie, et, lorsqu'il est dans sa première position, le verrou est dans le prolongement d'au moins une nervure de l'arbre de sortie.

Selon un deuxième aspect, l'invention concerne un dispositif d'entraînement motorisé pour l'entraînement d'un écran d'un dispositif d'occultation, entre au moins une première position et au moins une deuxième position, comprenant un tube d'enroulement de l'écran et un actionneur tel que mentionné ci-dessus, dont la roue de liaison est solidaire en rotation avec le tube d'enroulement, autour de l'axe de rotation.

Selon un troisième aspect, l'invention concerne un dispositif d'occultation comprenant un écran mobile entre au moins une première position et au moins une deuxième position et un dispositif d'entraînement motorisé de l'écran entre ses première et deuxième positions, qui est tel que décrit ci-dessus.

Selon un quatrième aspect, l'invention concerne un procédé d'assemblage d'un actionneur électromécanique, dans lequel a) on pré-monte un verrou pivotant à une extrémité d'un arbre de sortie de l'actionneur électromécanique, dans une première position, compatible avec la mise en place d'une roue de liaison sur l'arbre de sortie ; b) on engage une extrémité de l'arbre de sortie équipée du verrou pivotant dans un alésage central de la roue de liaison ; c) on bloque axialement la roue de liaison sur l'arbre de sortie en faisant pivoter le verrou pivotant, autour d'un axe radial à un axe de rotation de l'arbre de sortie, entre sa première position et une deuxième position de maintien en position axiale de la roue de liaison sur l'arbre de sortie.

L'invention sera mieux comprise et d'autres avantages de celle-ci apparaitront plus clairement à la lumière de la description qui va suivre d'un mode de réalisation d'un actionneur électromécanique, d'un dispositif d'entraînement motorisé, d'un dispositif d'occultation et d'un procédé de montage conformes à son principe, donnée uniquement à titre d'exemple et faite en référence aux dessins annexés dans lesquels :
- [Fig. 1] la figure 1 est une vue schématique partielle en perspective d'un dispositif d'occultation conforme à l'invention, incorporant un actionneur électromécanique et un dispositif d'entraînement également conformes à l'invention ;
- [Fig. 2] la figure 2 est une coupe partielle selon le plan II à la figure 1, montrant notamment l'actionneur mécanique ;
- [Fig. 3] la figure 3 représente sur deux inserts A) et B), des vues en perspective d'une roue d'entraînement, d'un arbre de sortie et d'un verrou pivotant appartenant à l'actionneur électromécanique visible à la figure 2 ;
- [Fig. 4] la figure 4 représente, sur deux inserts A) et B), des vues de côté partielles des éléments visibles sur les inserts A) et B) de la figure 3, respectivement dans le sens des flèches IIIA et IIIB ;
- [Fig. 5] la figure 5 est une vue en perspective éclatée des éléments visibles aux figures 3 et 4 ;
- [Fig. 6] la figure 6 représente, sur deux inserts A) et B) et à plus grande échelle, le verrou pivotant et l'extrémité de l'arbre de sortie visibles aux figures 3 à 5 ; et
- [Fig. 7] la figure 7 est une vue en perspective du verrou pivotant et de l'arbre de sortie, en configuration pré-montée du verrou pivotant sur l'arbre de sortie.

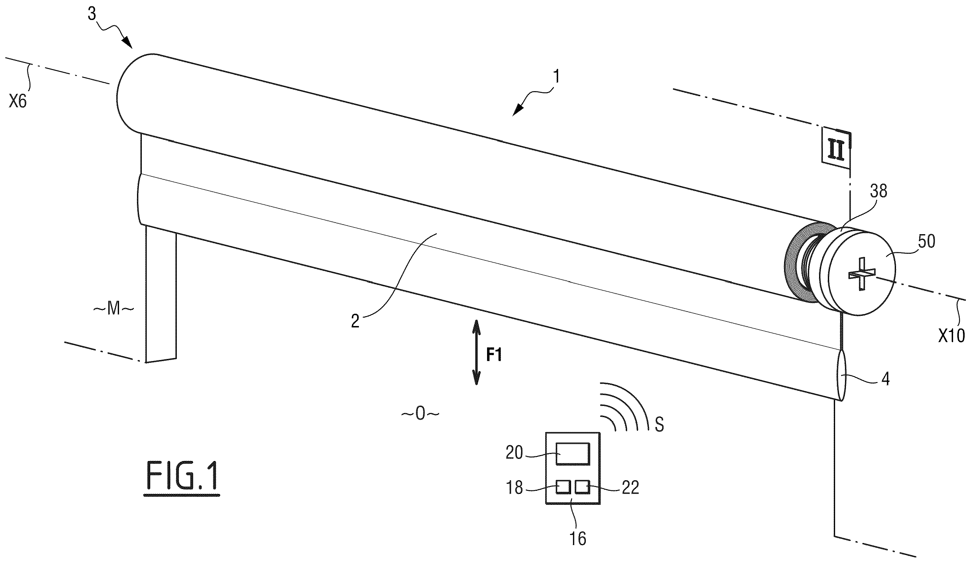

On décrit tout d'abord, en référence à la figure 1, une installation 1 comprenant un dispositif de fermeture, d'occultation ou de protection solaire 3 conforme à un premier mode de réalisation de l'invention. Cette installation 1 est mise en œuvre dans un bâtiment représenté par un de ses murs M qui comporte une ouverture O dans laquelle est disposée une fenêtre ou une porte, non représentée. Cette installation 1 est équipée d'un écran 2 qui appartient au dispositif de fermeture, d'occultation ou de protection solaire 3, lequel constitue, par exemple, un store motorisé.

L'écran 2 est configuré pour occulter, au moins partiellement, l'ouverture O ménagée dans le mur M, en étant dans des positions sélectionnées par un utilisateur, entre une position de fin de course haute et une position de fin de course basse.

Le dispositif de fermeture, d'occultation ou de protection solaire 3 est dans la suite dénommé « dispositif d'occultation » et comprend l'écran 2. L'expression « dispositif d'occultation » couvre donc les dispositifs de fermeture ou de protection solaire.

Ici, l'écran 2 peut être formé d'une toile, tissée ou non, et comprend une barre de charge 4 qui assure une tension d'une partie de l'écran 2 déroulée par rapport à un tube d'enroulement 6, mobile en rotation autour d'un axe d'enroulement X6 qui est horizontal en configuration montée de l'installation 1.

En fonction de la rotation du tube d'enroulement 6 autour de l'axe d'enroulement X6, une partie plus ou moins importante de l'écran 2 est déroulée et suspendue en dessous du tube d'enroulement 6 et la barre de charge 4 est déplacée verticalement, dans le sens de la double flèche F1 à la figure 1.

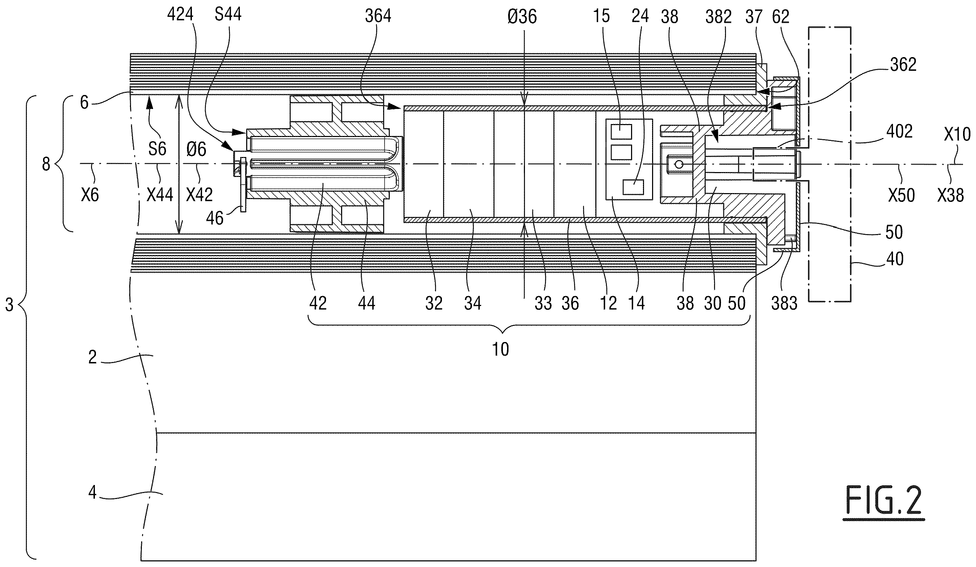

Un actionneur électromécanique 10 est disposé dans le tube d'enroulement 6 et comprend un moteur électrique 12 qui est représenté par son enveloppe extérieure à la figure 2. Avantageusement, le moteur électrique 12 comprend un rotor et un stator non représentés, qui sont positionnés de manière coaxiale autour d'un axe de rotation X10 de l'actionneur électromécanique 10.

Les axes X6 et X10 sont confondus en configuration montée du dispositif d'occultation 3 au sein de l'installation 1.

Avantageusement, le moteur électrique 12 est de type sans balais à commutation électronique, appelé également « BLDC » ou « synchrone à aimants permanents ». En variante, le moteur électrique 12 peut être à courant continu ou asynchrone, alimenté par un courant alternatif.

L'actionneur électromécanique 10 comprend également une unité de contrôle électronique 14 configurée pour piloter le moteur électrique 12 à partir d'ordres de commande reçus d'une unité de commande 16, qui peut être une unité de commande locale ou centrale, fixe ou mobile. De préférence, l'unité de contrôle électronique 14 est formée par une carte électronique équipée de composants électroniques, dont un microprocesseur 15.

Avantageusement, l'unité de commande 16 est équipée d'au moins un élément de sélection 18 et d'au moins un élément d'affichage 20. L'unité de commande 16 comprend également un premier module de communication à distance 22 capable d'émettre, et éventuellement de recevoir, des signaux électromagnétiques S, en particulier radios, à destination de l'unité de contrôle électronique 14 ou provenant de celle-ci.

A cet égard, l'unité de contrôle électronique 14 est équipée d'un deuxième module de communication 24 capable de recevoir les signaux électromagnétiques S, en particulier radios, et, éventuellement, d'émettre des signaux en retour à destination de l'unité de commande 16, en cas de communication bidirectionnelle entre le l'unité contrôle électronique 14 et l'unité de commande 16.

Avantageusement, pour pouvoir efficacement communiquer avec le module de communication 22, le module de communication 24 est raccordé à une antenne non représentée qui s'étend pour partie dans le tube d'enroulement 6 et pour partie à l'extérieur du tube d'enroulement.

L'actionneur électromécanique 10 comprend également un réducteur 32, une source d'énergie, telle qu'un ensemble de batteries 33 et un frein 34, qui sont représentés par leurs enveloppes extérieures respectives à la figure 2.

Le réducteur 32 comprend au moins un étage de réduction, par exemple de type épicycloïdal, voire d'un autre type. Le frein 34 permet de contrôler la vitesse de rotation du tube d'enroulement 6 autour de l'axe d'enroulement X6 ou de bloquer la rotation de ce tube.

Ici, l'ensemble de batteries 33 est positionné, le long de l'axe X10, entre le moteur électrique 12 et le frein 34. En variante non représentée de l'invention, l'ensemble de batteries 33 peut être positionné, le long de l'axe X10, entre le moteur électrique 12 et l'unité de contrôle électronique 14. Selon une autre variante non-représentée, l'ensemble de batteries 33 est positionné, le long de l'axe X10, à l'opposé du moteur électrique 12 par rapport à l'unité de contrôle électronique 14.

Ici, le frein 34 est positionné, le long de l'axe X10, entre le moteur électrique 12 et le réducteur 32. En variante non représentée de l'invention, le réducteur 32 peut être positionné, le long de l'axe X10, entre le moteur électrique 12 et le frein 34. Selon une autre variante non-représentée, le frein est positionné, le long de l'axe X10, entre deux étages du réducteur 32.

L'actionneur 10 comprend également un carter 36 dans lequel sont disposés les éléments 12, 14, 32, 33 et 34 et qui s'étend entre une première extrémité axiale 362, visible sur la droite de la figure 2, et une deuxième extrémité axiale 364 opposée à la première extrémité axiale le long de l'axe X10. L'extrémité axiale 362 du carter 36 est orientée du même côté qu'une extrémité axiale 62 du tube d'enroulement 6 visible à la figure 2.

Le carter 36 est de forme cylindrique. Il peut être réalisé en métal ou en matériau plastique. Le diamètre externe Φ36 du carter 36 est strictement inférieur au diamètre interne Φ6 du tube d'enroulement. L'actionneur électromécanique est dit tubulaire, en ce que le diamètre externe Φ36 de son carter 36 est largement plus petit que sa longueur axiale, prise le long de l'axe X10.

Dans l'exemple des figures, le diamètre externe Φ36 vaut 25 mm. Ceci confère une bonne compacité radiale à l'actionneur électromagnétique 10, compatible avec des tubes d'enroulement 6 de diamètre interne Φ6 relativement petit, notamment égal à 28 mm. Toutefois, la solution est également applicable à d'autres diamètres externes d'actionneurs électromécaniques tubulaires.

Une couronne-palier 37 est disposée autour de l'extrémité 362 du carter 36 et à l'intérieur de l'extrémité 62 du tube d'enroulement 6 qu'elle supporte, avec possibilité de rotation du tube d'enroulement 6 autour de l'axe X10, par rapport au carter 36.

Une tête d'actionneur 38 appartient également à l'actionneur 10 et permet de maintenir celui-ci en position à l'intérieur de l'arbre d'enroulement 6. La tête d'actionneur 38 est engagée dans le carter 36, du côté de sa première extrémité 362.

La tête d'actionneur 38 permet notamment d'accrocher l'actionneur 10 sur un support 40 qui peut être monté sur le mur M ou sur un flasque d'un caisson qui entoure le tube d'enroulement 6 ou sur une équerre de support, elle-même montée sur le mur ou suspendue à un plafond. A cet effet, la tête d'actionneur 38 est pourvue d'un logement 382 configuré pour recevoir un ou plusieurs pions de centrage 402 porté(s) par le support 40. La tête d'actionneur 38 assure donc, notamment, une fonction de support mécanique et de reprise d'effort pour l'actionneur électromécanique 10. En outre, la tête d'actionneur constitue un point fixe, ou point de référence, pour le moteur électrique 12.

Pour la clarté du dessin, le support 40 et son pion 402 ne sont représentés qu'à la figure 2, en traits mixtes.

Un couvercle 50, qui fait partie de l'actionneur électromécanique 10, est rapporté, de préférence de façon amovible, sur la tête d'actionneur 38, du côté de cette tête opposée au carter 36.

Un arbre de sortie 42 de l'actionneur électromécanique 10 fait saillie du carter 36, à l'opposé de la tête d'actionneur 38, c'est-à-dire du côté de la deuxième extrémité 364 de ce carter. L'arbre de sortie est configuré pour être entraîné en rotation par le moteur électrique 12, autour de l'axe de rotation X10, à travers le frein 34 et le réducteur 32. Cet arbre de sortie 42 est équipé d'une roue de liaison 44 solidaire en rotation, autour de l'axe d'enroulement X6, du tube d'enroulement 6.

Une rotation de l'arbre de sortie 42 autour de l'axe de rotation X10, qui résulte du fonctionnement du moteur électrique 12, a pour effet de faire tourner le tube d'enroulement 6 autour de l'axe d'enroulement X6 par l'intermédiaire de la roue 44, dans l'un de deux sens de rotation opposés, et de dérouler ou d'enrouler l'écran 2 autour du tube d'enroulement 6, en déplaçant la barre de charge 4 dans l'une des directions représentées par la double flèche F1 à la figure 1.

Ainsi, le tube d'enroulement 6 et l'actionneur électromécanique 10 appartiennent à un dispositif d'entraînement motorisé 8, qui permet de déplacer sélectivement l'écran 2 entre des positions choisies par l'utilisateur du dispositif d'occultation 3.

L'arbre de sortie 42 comprend une première extrémité 422 qui est engagée dans le carter 36 et qui est solidaire, en rotation autour de l'axe de rotation, d'un organe de sortie du réducteur 32, ainsi qu'une deuxième extrémité 424 opposée à la première extrémité 422 qui est disposée au-delà de la deuxième extrémité 364 du carter 36 par rapport aux éléments 12, 32, 33 et 34.

On note X42 un axe longitudinal de l'arbre de sortie 42. En configuration montée de l'actionneur électromécanique 10, les axes X42 et X10 sont confondus.

Avantageusement, l'arbre de sortie 42 comprend quatre nervures 426 qui sont longitudinales, c'est-à-dire qu'elles s'étendent parallèlement à l'axe longitudinal X42, et qui sont régulièrement reparties, à 90°, autour de cet axe. Les nervures 426, sont identiques et s'étendent, radialement à l'axe longitudinal X42 et de façon centrifuge, à partir d'un moyeu 428 de l'arbre de sortie 42. De préférence, l'arbre de sortie 42 est monobloc.

La roue de liaison 44 s'étend selon un axe longitudinal X44 qui est confondu avec les axes longitudinaux X10 et X42 en configuration montée de l'actionneur électromécanique 10. On note L44 la longueur axiale de la roue de liaison 44, mesurée parallèlement à l'axe X44.

La roue de liaison 44 comprend des reliefs radiaux externes 442 équipés de nervures radiales externes 444. L'ensemble formé par les reliefs 442 et les nervures 444 est complémentaire d'une surface radiale interne S6 de l'arbre d'enroulement 6, ce qui permet de solidariser l'arbre d'enroulement 6 et la roue de liaison 44, en rotation autour des axes X6 et X10 confondus en configuration montée du dispositif d'entraînement motorisé 8 et du dispositif d'occultation 3.

La roue de liaison 44 est pourvue d'un alésage central 445. Dans l'exemple représenté, la section de cet alésage central 445 est globalement en forme de croix, avec une zone centrale 448 correspondant au moyeu 428 et quatre rainures internes identiques 446 correspondant aux nervures 426. L'alésage central 445 peut également être dénommé ouverture centrale.

On note ℓ445 la largeur de l'alésage 445, mesurée perpendiculairement à l'axe longitudinal X44 entre les fonds de deux rainures 446 diamétralement opposées, et ℓ446 la largeur d'une des rainures internes. Les dimensions ℓ445 et ℓ446 sont choisies pour que le moyeu 426 et les nervures 426 puissent traverser de part en part la roue de liaison 44.

La forme complémentaire de l'alésage 445 par rapport au moyeu 428 et aux nervures 426 permet une solidarisation en rotation de la roue de liaison 44 sur l'arbre de sortie 42, autour des axes X42 et X44 confondus, par coopération de formes. Cette solidarisation par coopération de formes permet également la transmission d'un couple de rotation, des nervures 426 vers les rainures 446. Ainsi la roue 44 assure une liaison cinématique entre l'arbre de sortie 42 et l'arbre d'enroulement 6. La forme complémentaire de l'alésage 445 est adaptée par rapport au moyeu 428 et aux nervures 426, notamment au nombre et à la forme des nervures 426.

L'actionneur électromécanique 10 comprend également un verrou pivotant 46 monté au voisinage de l'extrémité 424 de l'arbre de sortie 42. Par « au voisinage », on entend qu'une zone de montage du verrou 46 sur l'arbre de sortie 42 se situe, le long de l'axe longitudinal X42 à par rapport à l'extrémité 424, à moins de 10% de la longueur de l'arbre de sortie.

Le verrou 46 est réalisé par une bande de métal élastiquement déformable. Par exemple, le métal en question peut être un acier ou un acier inoxydable. Alternativement, le verrou peut être réalisé en matériau plastique.

Le verrou 46 est monobloc et globalement en forme de U, avec un fond arrondi 462 et deux branches 464 dont les extrémités libres portent des plaquettes 468. Chaque plaquette 468 est percée d'un alésage 470 et comprend un ergot 472. Les deux ergots se font face et s'étendent l'un en direction de l'autre à partir des plaquettes 468. Les ergots 472 sont disposés aux extrémités des branches 464 et alignés sur un axe commun Y472.

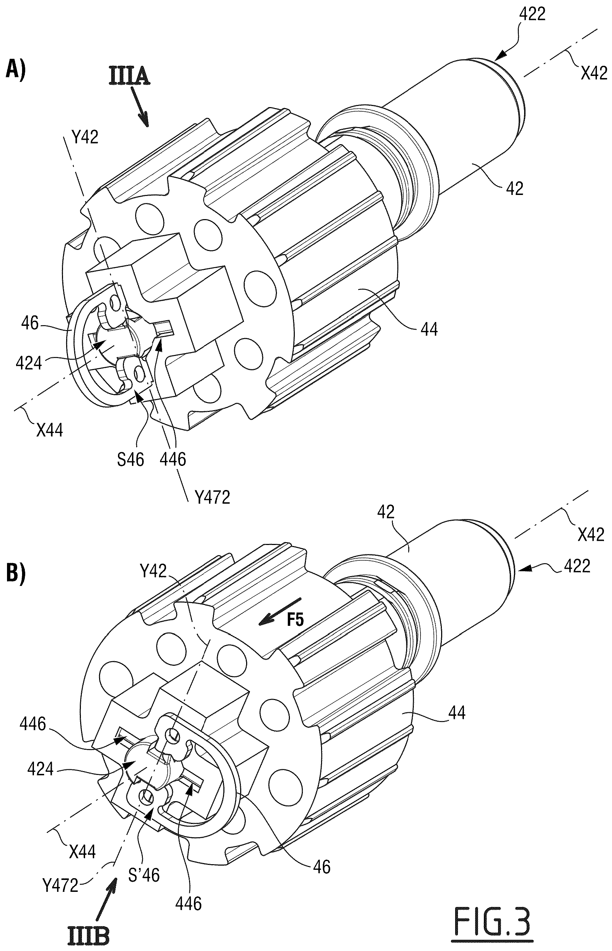

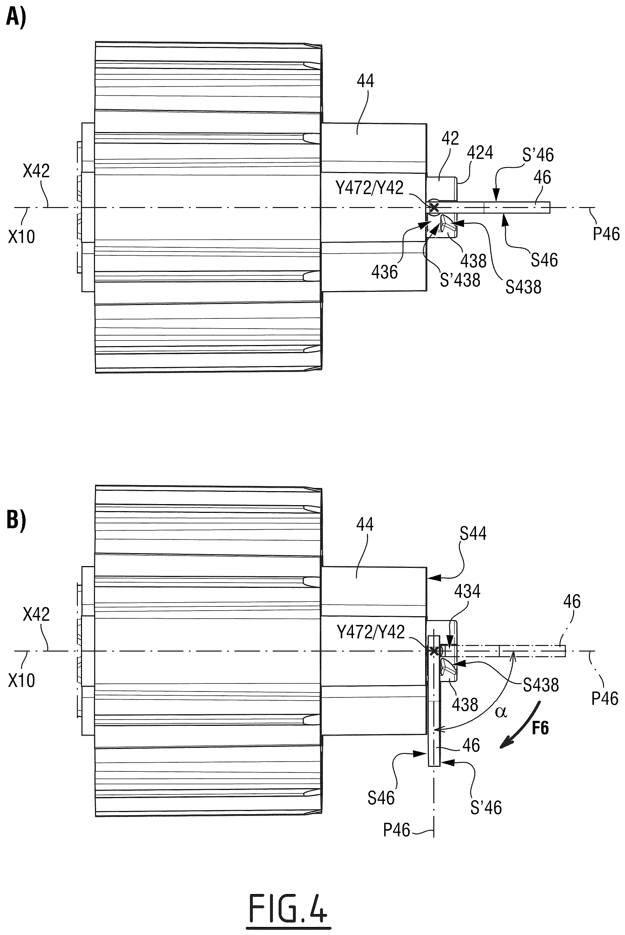

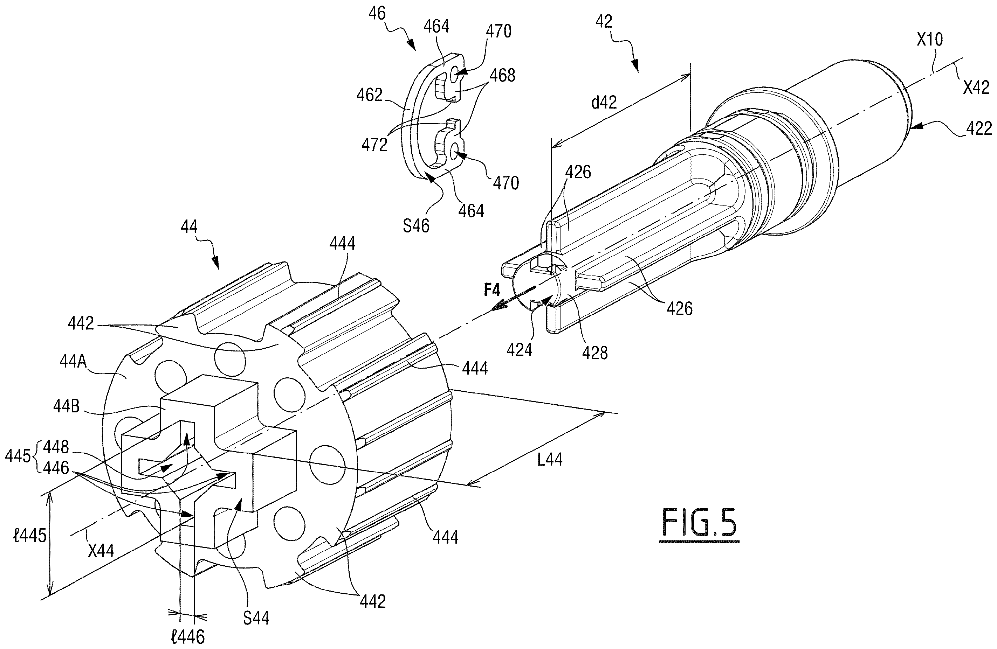

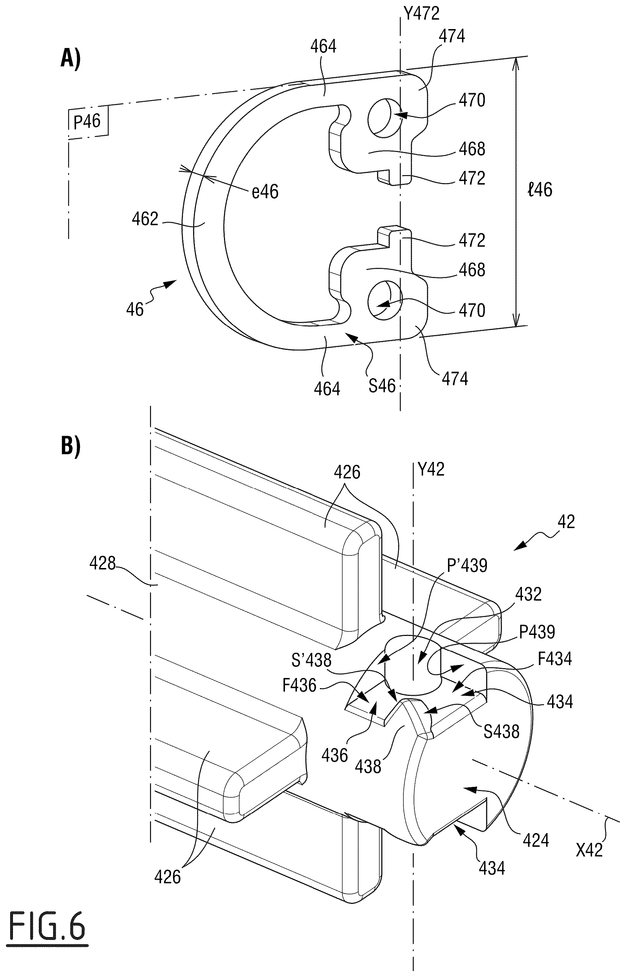

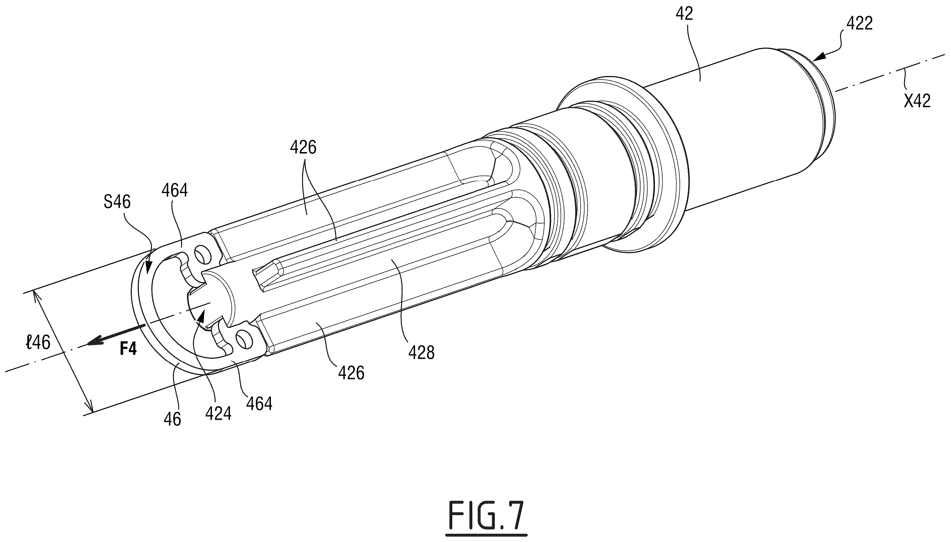

On note P46 un plan médian du verrou 46. Ce plan médian s'étend à égale distance de faces latérales S46 et S'46 du verrou 46 qui sont respectivement visibles sur l'insert A) et sur l'insert B) de la figure 3. Le plan médian est repéré sur les figures 4 et 6. La face latérale S46 est également visible aux figure 5 et 7, ainsi que sur l'insert A) de la figure 6. La trace des faces latérales S46 et S'46 est également visible à la figure 4.

On note e46 l'épaisseur du verrou 46, mesurée perpendiculairement au plan médian P46 et aux faces latérales S46 et S'46. On note ℓ46 la largeur de ce verrou mesurée entre les extrémités des branches 464, parallèlement au plan médian P46 et aux faces latérales S46 et S'46.

On note 474 deux talons qui font partie des plaquettes 468 et qui s'étendent, par rapport à l'axe Y472, à l'opposé du fond arrondi 432. Les talons 474 sont décalés radialement par rapport à l'axe Y472.

Avantageusement, l'extrémité 424 de l'arbre 42 est pourvue de deux logements de réception des ergots 472, dont un seul est visible sur l'insert B) de la figure 6, avec la référence 432. Les deux logements, 432 et équivalent, sont alignés sur un axe Y42 qui est radial à l'axe longitudinal X42 et qui forme un axe de pivotement du verrou 46 par rapport à l'extrémité 424 de l'arbre de sortie 42. En configuration monté de l'actionneur électromécanique 10, l'axe Y42 est radial à l'axe de rotation X10.

Avantageusement, les deux logements, 432 et équivalent, sont diamétralement opposés par rapport à l'axe X42 et alignés sur l'axe Y42. De plus, leur section est compatible avec un mouvement de rotation des ergots 472 dans ces logements, autour de l'axe Y42.

Au débouché de chaque logement 432, l'arbre de sortie 42 est pourvu d'une première encoche 434 et d'une deuxième encoche 436 qui communiquent avec le logement 432. On note respectivement F434 et F346 les fonds des encoches 434 et 436, qui sont avantageusement coplanaires. Les première et deuxième encoches sont séparées l'une de l'autre par un relief 438, en saillie par rapport aux fonds F434 et F436

On note S438 une première surface du relief 438, tournée vers la première encoche 434. On note S'438 une deuxième surface du relief 438, tournée vers la deuxième encoche 436. La surface S438 présente, par rapport au fond F434, un degré d'inclinaison moins marqué que la surface S'438 par rapport au fond F346. En d'autres termes, la première surface S438 forme un chanfrein qui s'élève progressivement par rapport au fond F434 de la première encoche 434, alors que la deuxième surface S'438 forme une surface de butée franche, quasi-orthogonale au fond F436 de la deuxième encoche 436.

Lorsque le verrou 46 est monté au niveau de l'extrémité 424 de l'arbre de sortie 42, avec ses ergots 472 reçus dans les logements 432 et équivalent, les axes Y42 et Y472 sont confondus et le verrou peut pivoter autour de l'axe Y42 et de l'axe Y472, entre une première position et une deuxième position.

Dans la première position représentée sur les inserts A) des figures 3 et 4 et sur la figure 7, les plaquettes 468 sont engagées, c'est-à-dire reçues partiellement, dans les premières encoches 434. Avantageusement, Dans cette première position, chaque plaquette 438 est en appui à la fois contre le fond F434 d'une encoche 434 et contre une paroi d'appui latérale P439 qui délimite la première encoche 434 et qui est parallèle à l'axe longitudinal X42. L'orientation angulaire du verrou 46 est ainsi fixée.

L'épaisseur e46 est strictement inférieure à la largeur ℓ446, alors que la largeur ℓ46 est strictement inférieure à la largeur ℓ445.

Il en résulte que, lorsque le verrou 46 est monté sur l'arbre de sortie et disposé dans sa première position, celui-ci ainsi que le moyeu 428 et les nervures 426 de l'arbre de sortie 42 peuvent être introduits dans l'alésage 445 et traverser de part en part la roue de liaison 44.

Le verrou passe de sa première à sa deuxième position par une rotation autour des axes Y42 et Y472, au moyen d'une déformation élastique temporaire permettant aux plaquettes 468 de passer par-dessus les deux reliefs 438, ce qui amène les plaquettes 468 à transiter de la première encoche 434 à la deuxième encoche 436 qui jouxte chaque logement 432.

Cette rotation a lieu sur une amplitude angulaire α de préférence égale à environ 90°, ce qui amène le verrou 46 en appui contre une paroi d'appui transversale P'439 qui délimite la deuxième encoche 436 et qui est perpendiculaire à l'axe longitudinal X42. L'amplitude angulaire α est visible à la figure 4 en comparant les positions du plan médian P46 sur l'insert B), où la représentation du verrou en traits d'axe correspond à sa position à l'insert A). Par environ 90°, on entend que l'amplitude angulaire α est égale à 90° à 5° près.

La différence de pente entre les surfaces S438 et S'438 a pour conséquence que le relief en saillie 48 s'oppose moins au pivotement du verrou 46 de sa première position vers sa deuxième position qu'au pivotement de ce verrou de sa deuxième position vers sa première position.

Avantageusement, dans la première position du verrou 46, le plan médian P46 est parallèle à l'axe X42, donc à l'axe X10 en configuration montée de l'actionneur 10. D'autre part, dans la deuxième position du verrou 46, le plan médian P46 est perpendiculaire à l'axe longitudinal X42, donc à l'axe de rotation X10 en configuration montée de l'actionneur.

Dans sa deuxième position, le verrou 46 s'oppose à l'extraction de la roue de liaison 44 par rapport à l'arbre de sortie 42, dans le sens de la flèche F5 sur l'insert B) de la figure 3. En d'autres termes, le verrou 46 maintient la roue de liaison en position axiale sur l'arbre de sortie 42.

Dans la deuxième position du verrou 46, les talons 474 sont en appui, par la surface S46, contre une surface frontale S44 de la roue de liaison 44 qui est opposée aux éléments 12, 14, 32, 33 et 34 en configuration montée de la roue de liaison sur l'arbre de sortie 42. Cet appui surfacique entre les surfaces S46 et S44, au niveau des talons 474, c'est-à-dire dans une zone décalée radialement par rapport aux axes Y42 et Y472, induit un couple résistant au pivotement du verrou 446, de sa deuxième position vers sa première position. Ainsi, le verrou 46 ne risque pas d'être pivoté accidentellement, de sa deuxième position vers sa première position, par une simple traction sur la roue de liaison 44, dans le sens de la flèche F5. Pour pivoter le verrou 46 de sa deuxième position vers sa première position, il faut exercer sur le fond 462 arrondi un couple suffisant pour vaincre le couple résistant dû aux talons 474.

Un procédé d'assemblage de l'actionneur électromécanique 10 commence en pré-montant le verrou 46 à l'extrémité 424 de l'arbre de sortie, dans sa première position, ce qui permet d'atteindre la configuration de la figure 7.

Les alésages 470 peuvent être utilisés lors de la mise en place du verrou 46 sur l'arbre de sortie 42, afin d'écarter les plaquettes 468 l'une de l'autre et de faciliter l'engagement des ergots 472 dans les logements 432. La manipulation du verrou 46 à travers les alésages 470 peut être réalisée avec une pince à circlip.

Ensuite, on engage l'extrémité 424 de l'arbre de sortie 42 équipé du verrou 46 à l'intérieur de l'alésage central 445 de la roue de liaison 44, dans le sens des flèches F4 aux figures 5 et 7.

Dans l'exemple représenté, lorsqu'il est dans sa première position, le verrou 432 est disposé dans le prolongement de deux des nervures 426 diamétralement opposées, selon des directions parallèles à 'axe longitudinal X42, de sorte qu'il ne perturbe pas l'introduction de l'arbre de sortie 42 dans l'alésage 445 et la traversée de cet alésage par l'extrémité 424 de cet arbre de sortie. Ceci est possible car l'épaisseur e46 est strictement inférieure à la largeur ℓ446 et car la largeur ℓ46 est strictement inférieure à la largeur ℓ445.

On atteint alors la position représentée sur les inserts A) des figures 3 et 4, où le verrou 46 dépasse de la roue de liaison 44, à l'opposé de son côté d'entrée dans l'alésage 445 en s'étendant parallèlement aux axes X42 et X44.

Il est alors possible de rabattre le verrou 46 en direction de la roue de liaison 44, dans le sens de la flèche F6 à la figure 4, ce qui a pour effet d'amener le verrou 46 dans sa deuxième position, dans laquelle il est efficacement retenu du fait de la butée formée par les surfaces de butée franche S'438 des deux reliefs 438.

Le pivotement du verrou dans le sens de la flèche F6 est aisée à mettre en oeuvre et peut être effectuée à la main.

Dans sa deuxième position, le verrou 46 s'oppose à un mouvement relatif dans la sens de la flèche F5, entre les pièces 42 et 44, en sens inverse du mouvement d'introduction de l'arbre de sortie 42 dans l'alésage 445. En d'autres termes, il maintient la roue de liaison 44 dans une position donnée par rapport à l'arbre de sortie 42.

On note d42 une distance entre, d'une part, l'extrémité des nervures 426 du côté la deuxième extrémité 424 de l'arbre de sortie 42 et, d'autre part, une jonction entre les nervures 426 et une partie externe du moyeu 428, à l'opposé de cette deuxième extrémité 424, cette jonction formant une butée pour la roue de liaison 44 lorsque celle-ci est enfilée sur l'arbre de sortie 42. La distance d42 est choisie sensiblement égale à la longueur L44. Ainsi, une fois le verrou 46 rabattu dans sa deuxième position, la roue de liaison 44 ne peut pas se déplacer, avec une amplitude importante, le long de l'arbre de sortie 42.

Dans la configuration des inserts B) des figures 3 et 4, l'effort de retenue axiale de la roue de liaison 44 sur l'arbre de sortie 42 est exercé par les deux plaquettes 468, de part et d'autre des axes X42 et X44, donc de l'axe de rotation X10 en configuration montée de l'actionneur 10. De plus, les talons 474 exercent un couple résistant au pivotement du verrou 46, de sa deuxième position vers sa première position. Ceci contribue à une stabilisation de l'effort de maintien obtenu.

Même si le maintien en position axial obtenu dans la deuxième position du verrou 46 est ferme, il reste possible de ramener le verrou dans sa deuxième position lorsque la roue de liaison 44 doit être démontée de l'arbre de sortie 42, par exemple lors d'une opération de maintenance de l'actionneur électromécanique 10. Dans ce cas, un pivotement du verrou autour des axes Y42 et Y472 confondus est mis en œuvre en sens inverse de la flèche F6. Ceci impose aux plaquettes 468 de franchir les reliefs en saillie 438, sous l'effet d'un effort plus intense que celui nécessaire lors du pivotement dans le sens de la flèche F6, compte tenu de l'inclinaison plus marquée de la surface de butée S'438 par rapport au fond F436, que celle du chanfrein S438 par rapport au fond F434. Cet effort plus intense ne doit être appliqué qu'en cas de démontage, dans le cadre d'une opération facile et intuitive pour un opérateur, opération qui peut être réalisée manuellement, sans outil.

L'invention est représentée dans le cas où la roue de liaison 44 comprend une partie principale 44A à la périphérie de laquelle sont ménagés les reliefs 442 et une partie secondaire 44B en forme de croisillon. Ceci n'est pas obligatoire et la roue de liaison 44 peut ne comprendre qu'une partie 44A ou, au contraire, une partie 44B à chacune des extrémités de la partie 44A.

L'invention est représentée dans le cas où deux encoches 434 et 436 de réception partielle des plaquettes 468 et deux reliefs 438 sont prévus au débouché de chacun des logements 432 et équivalent. En variante, de telles encoches sont prévues au débouché d'un seul de ces logements. Selon une autre variante, un seul relief 438 est prévu.

Toute caractéristique décrite ci-dessus pour un mode de réalisation ou une variante est applicable aux autres modes de réalisation et variantes, pour autant que cela est techniquement possible.

## Revendications

1. Actionneur électromécanique (10) d'un dispositif d'occultation (3), cet actionneur comprenant au moins :
- un moteur électrique (12) configuré pour entraîner un arbre de sortie (42) de l'actionneur en rotation autour d'un axe de rotation (X10) ;
- une roue (44) de liaison cinématique entre le l'arbre de sortie et un tube d'enroulement (6) d'un écran (2),
**caractérisé en ce que** l'arbre de sortie (42) est équipé d'un verrou, pivotant autour d'un axe de pivotement (Y42) radial à l'axe de rotation (X10) entre une première position, compatible avec la mise en place (F4) de la roue de liaison (44) sur l'arbre de sortie, et une deuxième position, de maintien en position axiale de la roue de liaison sur l'arbre de sortie.

2. Actionneur électromécanique selon la revendication 1, dans lequel le verrou (46) est une bande de métal élastiquement déformable, globalement en forme de U, notamment de type de circlip.

3. Actionneur électromécanique selon l'une des revendications précédentes, dans lequel l'amplitude angulaire (α) de pivotement du verrou (46), autour de l'axe de pivotement (Y42), entre ses première et deuxième positions, est d'environ 90°, dans lequel un plan médian (P46) du verrou (46) est parallèle à l'axe de rotation (X10) lorsque le verrou est dans sa première position et dans lequel le plan médian du verrou est perpendiculaire à l'axe de rotation lorsque le verrou est dans sa deuxième position.

4. Actionneur électromécanique selon l'une des revendications précédentes, dans lequel le verrou (46) comprend deux ergots (472) et dans lequel l'arbre de sortie (42) comprend deux logements (432) diamétralement opposés et configurés pour recevoir les ergots, avec possibilité de rotation des ergots (472) dans les logements (432) permettant le pivotement du verrou entre ses première et deuxième positions.

5. Actionneur électromécanique selon les revendications 2 et 4, dans lequel les ergots (472) sont disposés sur des plaquettes (468) disposées aux extrémités des branches (464) du U, se font face et s'étendent l'un en direction de l'autre.

6. Actionneur électromécanique selon l'une des revendications 4 et 5, dans lequel
- chaque ergot (472) s'étend à partir d'une plaquette (468) du verrou (46) ;
- l'arbre de sortie (42) définit au moins une première encoche (464) de réception partielle d'une plaquette (468) lorsque le verrou est dans sa première position ;
- l'arbre de sortie définit au moins une deuxième encoche (4326) de réception partielle de la plaquette lorsque le verrou est dans sa deuxième position et
- un relief en saillie (438) sépare les première et deuxième encoches.

7. Actionneur électromécanique selon la revendication précédente, dans lequel le relief en saillie (438) est délimité par un chanfrein (S438) du côté de la première encoche (434) et par une surface de butée (S'438) du côté de la deuxième encoche (436) et dans lequel le relief en saillie s'oppose moins au pivotement du verrou (46) de sa première position vers sa deuxième position qu'au pivotement du verrou de sa deuxième position vers sa première position.

8. Actionneur électromécanique selon l'une des revendications précédentes, dans lequel l'arbre de sortie (42) comprend des nervures (426) de transmission de couple à la roue de liaison (44), laquelle est équipée de rainures (446) internes de réception des nervures de l'arbre de sortie, et dans lequel, lorsqu'il est dans sa première position, le verrou (46) est dans le prolongement d'au moins une nervure de l'arbre de sortie.

9. Dispositif d'entraînement motorisé (8) pour l'entraînement d'un écran (2) d'un dispositif d'occultation, entre au moins une première position et au moins une deuxième position, comprenant un tube (6) d'enroulement de l'écran et un actionneur (10) selon l'une des revendications précédentes, dont la roue de liaison (44) est solidaire en rotation avec le tube d'enroulement, autour de l'axe de rotation (X10).

10. Dispositif d'occultation (3) comprenant
- un écran (2) mobile entre au moins une première position et au moins une deuxième position ;
- un dispositif d'entraînement motorisé (8) de l'écran entre ses première et deuxième positions, qui est selon la revendication précédente.

11. Procédé d'assemblage d'un actionneur électromécanique (10), dans lequel
a) on pré-monte un verrou pivotant (46) à une extrémité (424) d'un arbre de sortie (42) de l'actionneur électromécanique, dans une première position, compatible avec la mise en place d'une roue de liaison (44) sur l'arbre de sortie,
b) on engage une extrémité de l'arbre de sortie équipée du verrou pivotant (46) dans un alésage central (445) de la roue de liaison,
c) on bloque axialement la roue de liaison sur l'arbre de sortie en faisant pivoter (F6) le verrou pivotant, autour d'un axe (Y42) radial à un axe de rotation (X10) de l'arbre de sortie, entre sa première position et une deuxième position de maintien en position axiale de la roue de liaison (44) sur l'arbre de sortie (42).
